# FASCICULE DE BREVET EUROPEEN

(11) **EP 2 893 170 B1**
(45) Date de publication et mention de la délivrance du brevet: **27.10.2021**
(21) Numéro de dépôt: 13765371.3
(22) Date de dépôt: 05.09.2013
(51) Int. Cl.: F02C 7/32

(54) **ASSEMBLAGE AVEC UN DISPOSITIF DE BOUCHAGE D'UNE OUVERTURE D'UNE PAROI D'ENCEINTE POUR L'ACCES A UN ARBRE ROTATIF**
BAUGRUPPE MIT EINER VORRICHTUNG ZUR VERSIEGELUNG EINER ÖFFNUNG EINER GEHÄUSEWAND FÜR DEN ZUGANG AUF EINE DREHWELLE
ASSEMBLY WITH A DEVICE FOR SEALING AN OPENING OF AN ENCLOSURE WALL FOR ACCESS TO A ROTARY SHAFT

(30) Priorité: 07.09.2012 FR 1258366
(43) Date de publication de la demande: 15.07.2015
(73) Titulaire: Safran Aircraft Engines, 75015 Paris (FR)
(72) Inventeur: GALIVEL, Jean-Pierre, Elie, F-77550 Moissy-Cramayel (FR)
(74) Mandataire: Gevers & Orès
(86) Numéro de dépôt international: PCT/FR2013/052050
(87) Numéro de publication internationale: WO 2014/037672

(56) Documents cités:
- FR-A1- 2 952 121
- US-A- 3 263 728
- US-A- 3 465 803
- US-A- 4 458 711
- US-A- 5 059 075
- US-A1- 2006 260 694

## Description

La présente invention concerne un dispositif de bouchage d'une ouverture ménagée dans une paroi d'une enceinte et permettant l'accès, à des fins d'inspection, d'un arbre rotatif logé dans celle-ci. Elle concerne, dans une application particulière, quoique non exclusive, une enceinte d'un boîtier à engrenages du type destiné à l'entraînement des équipements accessoires dans un turbomoteur tel qu'un turboréacteur, le boîtier comprenant un arbre d'entraînement manuel des engrenages permettant la rotation du rotor pendant les opérations de maintenance du moteur. L'arbre étant accessible de l'extérieur du boîtier, un dispositif de bouchage amovible ferme le passage en fonctionnement hors opération de maintenance. Un tel exemple est décrit dans le document de brevet FR-A1-2952121.

On sait qu'un turbomoteur aéronautique, turboréacteur ou turbopropulseur, comprend des équipements accessoires ou auxiliaires : pompes, alternateurs et autres qui sont généralement entraînés mécaniquement à partir des arbres moteurs, notamment par l'arbre du rotor HP. Selon une mise en œuvre conventionnelle, les accessoires sont montés sur un support d'équipements. Le support que l'on désigne couramment par son acronyme en anglais AGB, pour « Accessory Gear Box », signifiant boîte d'engrenages des accessoires, comprend un boîtier incorporant un mécanisme formé de pignons à axes parallèles et engrenant les uns avec les autres. Les pignons sont entraînés par un arbre d'entrée qui est lui-même relié par une chaîne cinématique à un arbre du turbomoteur. Les accessoires sont ainsi montés en parallèle sur le support en étant accouplés mécaniquement aux pignons par lesquels ils sont entraînés. La lubrification des pignons est assurée par une circulation d'huile à l'intérieur du boîtier d'engrenages.

Un des pignons n'est utilisé pour l'entraînement d'aucun équipement accessoire ; il sert principalement à l'entraînement manuel en rotation du rotor dans les opérations d'inspection et de révision du turbomoteur. Le boîtier AGB comprend ainsi une ouverture ou un passage donnant accès à un arbre portant ce pignon depuis l'extérieur par un organe d'entraînement. Cette ouverture est fermée, avec étanchéité, par un dispositif de bouchage lorsque le moteur n'est pas en révision.

Le dispositif comporte généralement un corps cylindrique monobloc muni, à sa périphérie, de joints toriques d'étanchéité coopérant avec la surface ou périphérie interne délimitant l'ouverture de la paroi. En sortie extérieure de l'ouverture, le corps s'étend radialement par un collet transversal formant le couvercle et qui s'applique contre la paroi pour y être fixé par des éléments de fixation tels des vis.

Ce dispositif est ôté lorsque l'inspection du moteur nécessite l'accès à ce pignon et donc à l'arbre, avec retrait des vis et extraction axiale du dispositif de bouchage. Après inspection de l'arbre (avec rotation de celui-ci par l'organe d'entraînement de type manivelle ou analogue), le dispositif de bouchage est remis en place par l'introduction du corps avec les joints dans l'ouverture puis boulonnage du couvercle sur la paroi du boîtier, avant la mise en service du moteur.

L'impératif de sécurité des machines aéronautiques implique cependant de devoir prendre en compte le cas éventuel où le couvercle ne serait pas remonté correctement ou serait simplement oublié. Si cela devait se produire, en fonctionnement, l'huile de lubrification des organes mécaniques du boîtier s'échapperait par l'ouverture avec pour conséquence inévitable, l'arrêt du moteur.

De plus, dans le cas qui nous concerne, une canalisation interne d'huile débouche dans la périphérie de l'ouverture dans un évidement externe du corps, délimité par des joints toriques d'étanchéité.

Ainsi, si par oubli le dispositif de bouchage n'est pas installé, dès que le moteur est démarré, une alarme basse pression dans le circuit d'huile est déclenchée, puisque l'huile s'échappe massivement vers l'extérieur par la canalisation alors à l'air libre, ce qui permet d'identifier rapidement le problème et de provoquer l'arrêt du moteur avant que cela n'entraîne des conséquences désastreuses pour l'avion.

En revanche, le couvercle du dispositif de bouchage peut être installé dans l'ouverture sans les vis, c'est-à-dire avec le corps et les joints d'étanchéité engagés dans l'ouverture et le couvercle plaqué contre la paroi. Ainsi, le dispositif peut être maintenu en place dans l'ouverture par des forces de frottement entre les joints toriques et la périphérie interne de l'ouverture.

Dans ce cas, lorsque le moteur fonctionne au sol au ralenti, il est peu probable que le dispositif de bouchage soit éjecté, de sorte que l'alarme basse pression ne détecte rien. Cependant, le risque de ne pas détecter le montage incorrect, sans les vis, est patent, et notamment, avant les phases de décollage ou de croisière avec un moteur en pleine charge, et donc un circuit d'huile pressurisé au maximum, en provoquant à coup sûr l'éjection du dispositif de bouchage. Une telle situation entraînerait l'arrêt du moteur à un moment inopportun et doit donc être absolument évitée.

On peut aussi envisager le cas où les vis sont bien montées mais insuffisamment serrées, de sorte qu'un jeu risque d'apparaître entre le couvercle du corps du dispositif et la paroi de l'enceinte, avec rapidement une perte d'huile lors du fonctionnement du moteur.

La présente invention a pour objectif de remédier à ces inconvénients en éliminant les problèmes liés notamment à l'absence des éléments de fixation après remontage du dispositif de bouchage.

À cet effet, un assemblage comprenant :
- une paroi d'une enceinte dans laquelle est ménagée une ouverture permettant l'accès à un arbre rotatif,
- un dispositif de bouchage de ladite ouverture, ledit dispositif étant apte à s'engager avec étanchéité dans ladite ouverture et à être fixé contre la paroi par des éléments de fixation, le dispositif de bouchage étant remarquable par le fait qu'il comprend deux pièces cylindriques assemblées de façon coulissante l'une par rapport à l'autre, coaxialement à l'ouverture, une première pièce apte à se loger de façon statique dans l'ouverture et une seconde pièce apte à être fixée à la paroi par les éléments de fixation et qui est soumis à l'action d'un moyen élastique prévu entre les première et seconde pièces assemblées et tendant à éloigner axialement la seconde pièce de la paroi.

Ainsi, à la différence d'un dispositif de bouchage à corps monobloc, si les éléments de fixation sont absents, voire incomplètement vissés, la seconde pièce déplaçable sera repoussée vers l'extérieur de l'ouverture de la paroi, par le moyen élastique assisté de plus par la pression de l'huile lorsque le moteur est mis en marche. De la sorte, un espace est créé entre l'ouverture et la seconde pièce, engendrant une fuite d'huile importante qui sera alors inévitablement détectée par l'alarme basse pression usuelle.

En conséquence, un tel dispositif de bouchage s'affranchit des inconvénients précédents et évite le risque de faire fonctionner le moteur avec un dispositif de bouchage engagé et mal fixé (sans les vis ou avec des vis non serrées).

Dans une réalisation préférée, le moyen élastique est un ressort de compression prenant appui sur des faces transversales correspondantes de la première pièce fixe et de la seconde pièce déplaçable.

Pour marquer la position axialement fixe de la première pièce, celle-ci est montée en butée axiale dans l'ouverture.

Par exemple, la première pièce présente un épaulement externe apte à s'appliquer contre un épaulement interne formant butée axiale de ladite ouverture.

En particulier, les première et seconde pièces portent autour d'elles des joints d'étanchéité aptes à coopérer avec l'ouverture (le joint d'étanchéité de la première pièce fixe coopérant avec la surface interne de l'ouverture, et le joint d'étanchéité de la seconde pièce déplaçable coopérant avec cette surface interne ou avec la face transversale de la paroi délimitant l'entrée de l'ouverture), ledit moyen élastique étant prévu dans un espace ou chambre périphérique prévu entre les joints d'étanchéité desdites pièces. Le canal d'alimentation en huile issu du boîtier ou de l'enceinte débouche dans cet espace entre les deux joints, lorsque le dispositif est monté, pour permettre l'écoulement de l'huile et engendré la fuite d'huile hors de l'ouverture lorsque la seconde pièce mobile est repoussée de l'ouverture par le moyen élastique, par l'absence ou le vissage insuffisant des éléments de fixation.

Dans une réalisation préférée, la seconde pièce déplaçable est montée avec étanchéité en partie entre la première pièce fixe et la surface interne de l'ouverture, et se termine par un collet radial formant couvercle apte à être rapporté contre la paroi de l'enceinte par les éléments de fixation.

Avantageusement, la seconde pièce est montée autour de la première pièce et est déplaçable axialement entre un épaulement externe de la première pièce et une pièce de butée solidaire de la première pièce. Ainsi, elle reste liée à cette dernière et son déplacement axial, sous l'action du moyen élastique, est par ailleurs limité et suffisant pour engendrer une fuite importante.

Par exemple, la pièce de butée est vissée dans un passage taraudé de la première pièce fixe et présente un rebord transversal externe formant butée axiale pour la seconde pièce déplaçable.

L'invention concerne aussi un boîtier à engrenages formant une enceinte support des machines accessoires d'un turbomoteur, comportant une paroi extérieure dans laquelle est ménagée une ouverture d'accès à un arbre d'entraînement manuel d'un rotor du turbomoteur ou d'une machine accessoire, et un dispositif de bouchage de ladite ouverture d'accès.

Avantageusement, ledit dispositif de bouchage est tel que défini précédemment.

D'autres caractéristiques et avantages apparaîtront à la lecture de la description détaillée d'un mode de réalisation non limitatif de l'invention, en référence aux dessins sur lesquels :
- la figure 1 montre le schéma d'un turbomoteur auquel s'applique la solution de l'invention ;
- la figure 2 montre, en coupe longitudinale, le dispositif de bouchage conforme à l'invention avant son montage dans l'ouverture d'une enceinte permettant l'accès à un arbre rotatif ;
- la figure 3 montre, en demi-coupe longitudinale, le dispositif de bouchage monté dans l'ouverture et fixé correctement à la paroi de l'enceinte ; et
- les figures 4, 5 et 6 montrent, en demi-coupe longitudinale, le dispositif de bouchage monté, respectivement, sans les vis de fixation, avec un mauvais remontage des vis et en cas d'un oubli de serrage des vis avec un outil.

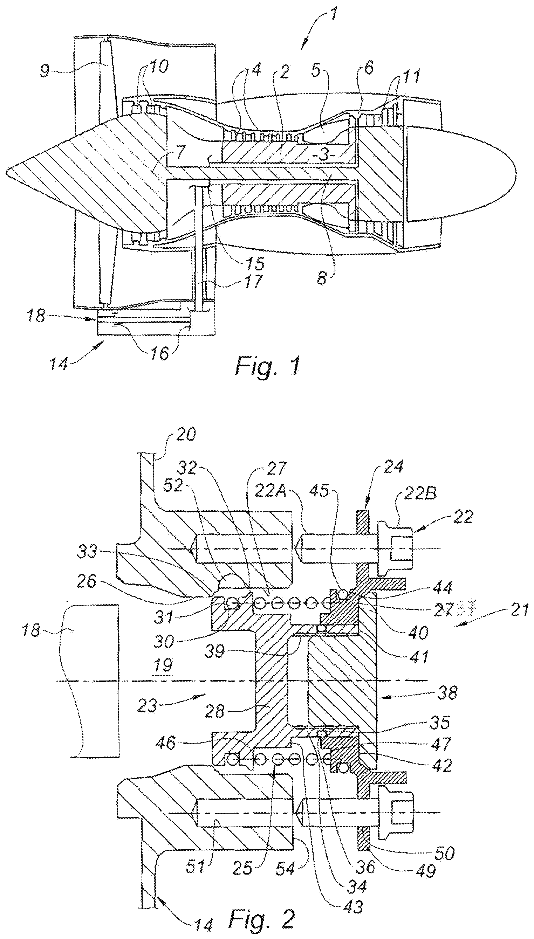

En se reportant à la figure 1, on voit un turbomoteur 1, ici un turboréacteur à double corps et double flux. Il comprend communément un rotor haute pression 2 avec successivement, d'amont en aval, un compresseur haute pression 4, une chambre de combustion 5 et une turbine 6 ; cette dernière est reliée par un arbre 3 au compresseur qu'il entraîne. Le rotor basse pression 7 comprend la soufflante 9 à l'amont et le compresseur basse pression 10 en amont du rotor haute pression ; les deux sont reliés par un arbre 8 basse pression à la turbine 11 en aval de la turbine haute pression 6.

Un support d'équipements 14, formant boîtier ou enceinte, est monté sur la virole externe du carter de la soufflante ou du carter intermédiaire. Ce support contient les équipements accessoires du moteur tels que les pompes de carburant et d'huile, et les générateurs électriques. Ces équipements sont entraînés par des pignons 16 logés dans le boîtier 14, auxquels ils sont accouplés par des liaisons appropriées. Ces pignons 16 engrènent les uns avec les autres et sont eux-mêmes mis en mouvement par une chaîne cinématique constituée d'une pluralité d'arbres 17 de transmission entre le boîtier 14 et les pignons coniques 15 d'un renvoi d'angle sur l'arbre 3 du rotor haute pression.

En référence à la figure 2, on a représenté l'extrémité d'un arbre 18 accessible de l'extérieur du boîtier 14 par une ouverture 19, par exemple circulaire, prévue dans la paroi 20 du boîtier, coaxialement à l'arbre.

L'extrémité de l'arbre 18 est conformée pour permettre l'engagement d'un outil pour la mise en rotation manuelle des pignons 16 (l'un de ceux-ci, non représenté, étant solidaire de l'arbre 18) des arbres 17, et de la chaîne cinématique lors des opérations d'inspection du rotor haute pression du moteur.

Hors de la maintenance de celui-ci, l'ouverture 19 est obturée par un dispositif de bouchage ou d'étanchéité 21 qui est fixé de manière amovible par des éléments de fixation 22 à la paroi du boîtier.

Le dispositif de bouchage 21 de l'ouverture ménagée dans la paroi 20 du boîtier 14, pour accéder à l'arbre rotatif 18, comporte, comme le montre la figure 2, deux pièces principales cylindriques 23 et 24 assemblées de façon coulissante l'une par rapport à l'autre avec un moyen élastique 25 entre elles, tendant à les écarter ou éloigner axialement l'une de l'autre.

Dans l'application de l'invention, la première pièce 23 est destinée à s'engager en butée axiale dans un premier alésage 26 de l'ouverture 19, en y étant maintenue de façon statique, comme on le verra ultérieurement. Et la seconde pièce 24 est montée en partie autour de la première pièce et est destinée à s'engager elle aussi dans l'ouverture mais dans un alésage 27 de diamètre supérieur au premier, débouchant vers l'extérieur du boîtier, pour être fixée à la paroi 20 par les éléments de fixation tels que des vis 22.

En particulier, la première pièce cylindrique 23 formant bouchon comporte un fond transversal 28 obturant l'ouverture 19 et à la périphérie 29 duquel est ménagée une gorge 30 pour la réception d'un joint torique d'étanchéité 31. À cette périphérie est par ailleurs prévu un épaulement annulaire externe 32 apte à venir en butée axiale contre un épaulement annulaire interne 33 prévu au niveau du changement de sections des deux alésages 26, 27 de l'ouverture.

Le fond transversal 28 se prolonge, du côté opposé à l'arbre, par une paroi latérale annulaire 34 qui comporte en périphérie une gorge 35 pour la réception d'un joint torique d'étanchéité 36.

Autour de la paroi latérale 34 de la première pièce 23 est montée la paroi latérale annulaire 37 de la seconde pièce 24. Pour empêcher la sortie de celle-ci par rapport à la première pièce, une pièce de butée 38 est prévue. Cette dernière est montée par vissage dans un trou taraudé central 39 délimité par la paroi latérale 34 de la première pièce jusqu'à venir s'appliquer par un rebord transversal externe 40 de la pièce 38, contre la face transversale correspondante 41 de la paroi latérale 34 de la première pièce.

Le rebord transversal 40 déborde radialement de celle-ci, de sorte que la seconde pièce annulaire 24, préalablement montée sur la paroi latérale de la première pièce, est poussée, sous l'action du moyen élastique tel qu'un ressort de compression 25, en butée axiale par contre le rebord transversal 40 de la pièce 39, contre lequel s'applique la face transversale externe 42 de la seconde pièce 24. La seconde pièce peut ainsi coulisser entre cette position de butée et une autre position, avec le ressort comprimé, en direction d'un épaulement transversal externe 43 de la paroi latérale 34, par suite du vissage des vis, comme on le verra plus tard.

Par ailleurs, en périphérie extérieure de la paroi latérale 37 de la seconde pièce se trouve une gorge 44 dans laquelle est reçu un joint torique d'étanchéité 45 apte à coopérer avec la surface du second alésage 27.

Quant au ressort de compression 25, il entoure les pièces 23, 24 et prend appui, d'une part, contre une face transversale 46 ménagée dans la périphérie 29 du fond et de laquelle est issu l'épaulement de butée 32 de la première pièce contre l'ouverture, et, d'autre part, contre une face transversale 47 de la paroi annulaire 37 de la seconde pièce.

Lorsque les deux pièces du dispositif de bouchage 21 sont assemblées, le ressort se trouve entre les joints 31, 45 avec les pièces qui ont tendance à s'écarter spontanément par le ressort 25 en poussant la seconde pièce 24 contre le rebord transversal 40 de la pièce de butée 38, la paroi 37 de la seconde pièce coopérant avec le joint d'étanchéité 36 de la première pièce.

On voit, par ailleurs, que la paroi annulaire 37 de la seconde pièce s'étend transversalement par un collet ou embase 49 dans lequel sont ménagés, de façon régulièrement répartie, des trous 50 pour le passage des tiges filetées 22A des vis de fixation 22.

L'approche du dispositif de bouchage 21 ainsi assemblé, en regard de l'ouverture 19 du boîtier 14, est montrée sur la figure 2.

À propos du boîtier, il comporte dans sa paroi 20, autour de l'ouverture 19, des trous taraudés 51 pour la réception des tiges des vis 22, et, de façon usuelle, la canalisation ou canal d'alimentation en huile 52, d'un côté, en communication avec l'intérieur du boîtier 14 dans lequel se trouve l'arbre 18 et, de l'autre côté, débouchant dans l'alésage 27 comme le montrent les figures 2 à 6.

Le montage en lui-même du dispositif 21 dans l'ouverture 19 ne soulève pas de difficultés.

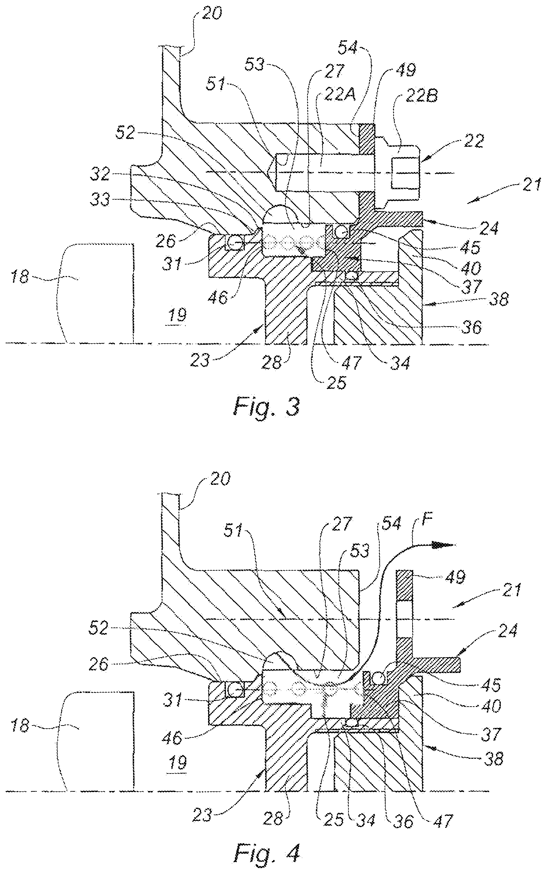

Comme le montre la figure 3, la première pièce cylindrique 23 du dispositif est engagée dans l'ouverture avec le joint torique d'étanchéité 31, en périphérie externe 29 du fond, au contact de la surface délimitant le premier alésage 26, engagement qui se poursuit jusqu'au contact de l'épaulement externe 32 de la première pièce contre celui interne, 33, de l'ouverture.

Puis, les vis de serrage 22 sont montées pour la fixation du collet 49 de la seconde pièce cylindrique 24 contre la face transversale extérieure 54 de la paroi, les tiges 22A se vissant dans les trous taraudés 51 de la paroi, jusqu'au contact des têtes 22B des vis contre le collet, lui-même, contre la paroi.

Simultanément, comme la première pièce 23 est en butée axiale contre le boîtier, le vissage a entraîné le coulissement de la seconde pièce 24 vers la première avec la compression du ressort 25, et le rapprochement de la paroi 37 de l'épaulement 43 de la première pièce axialement fixe. Durant le coulissement, le joint d'étanchéité extérieur 45 de la seconde pièce 24, mobile, est entré en contact avec la surface délimitant le second alésage 27, tandis que la paroi 37 de la seconde pièce annulaire est toujours au contact du joint d'étanchéité 36 de la paroi latérale 34 de la première pièce 23. La seconde pièce 24 est ainsi éloignée du rebord transversal 40 formant butée de la pièce 38. Dans une variante de réalisation non représentée, on peut envisager d'agencer le joint d'étanchéité 45 entre le collet 49 et la face transversale 54 de la paroi. Dans ce cas, le joint torique de la figure 3 sera remplacé par un joint plat, l'étanchéité étant assurée par le serrage complet des vis 22.

La chambre ou espace interne 53 dans laquelle se trouve le ressort 25 et qui est délimitée par les faces transversales 46 et 47 des pièces et la surface de l'alésage 27 est en communication avec la canalisation d'huile 52, tout en étant rendue étanche vis-à-vis de l'extérieur par les différents joints.

Dans la représentation illustrée sur la figure 3, l'ouverture 19 est convenablement obturée par le dispositif d'étanchéité 21 par les joints toriques 31, 36, 45, de sorte que le moteur peut fonctionner en toute sécurité. L'alarme basse pression reste inactive puisqu'elle ne détecte pas de chute de pression dans le boîtier.

L'arbre est ainsi isolé de façon étanche de l'extérieur.

On suppose maintenant que, après retrait du dispositif de bouchage 21 et inspection de l'arbre 18 et des mécanismes associés, le dispositif soit remis dans l'ouverture 19 dans la position illustrée sur la figure 4. Le dispositif est certes engagé dans l'ouverture avec le joint d'étanchéité 31 de la première pièce au contact de la surface interne de l'alésage 26, mais la seconde pièce reste, quant à elle, à l'extérieur de l'ouverture par l'action du ressort de compression.

Une telle position se produit lorsque les vis de serrage 22 ne sont pas remis en place suite à un oubli de l'opérateur.

Avantageusement, la réalisation du dispositif 21 en deux pièces axialement mobiles par un moyen élastique permet de maintenir la seconde pièce à l'extérieur et à distance de l'ouverture 19 en créant un espace suffisant entre la paroi de la seconde pièce 24 et l'entrée de l'ouverture 19 (alésage 27). En effet, par l'action du ressort 25, la seconde pièce 24 est spontanément repoussée contre le rebord 40 de la pièce 38.

De la sorte, dès que le moteur est mis en marche, une fuite d'huile massive se produit par l'huile sortant du canal 32 pour aller dans la chambre 53 et s'échapper hors du boîtier 14 à travers l'ouverture par l'espace annulaire créé, comme le montre la flèche F.

Cette perte totale d'étanchéité se traduit par une baisse de pression dans le boîtier qui est immédiatement détectée par l'alarme basse pression.

La seconde pièce 24 est maintenue vers l'extérieur sous l'effet du ressort et de la pression interne de l'huile s'échappant par le canal. Le dispositif 21 joue ainsi parfaitement son rôle de sécurité en établissant une fuite d'huile significative rapidement détectable.

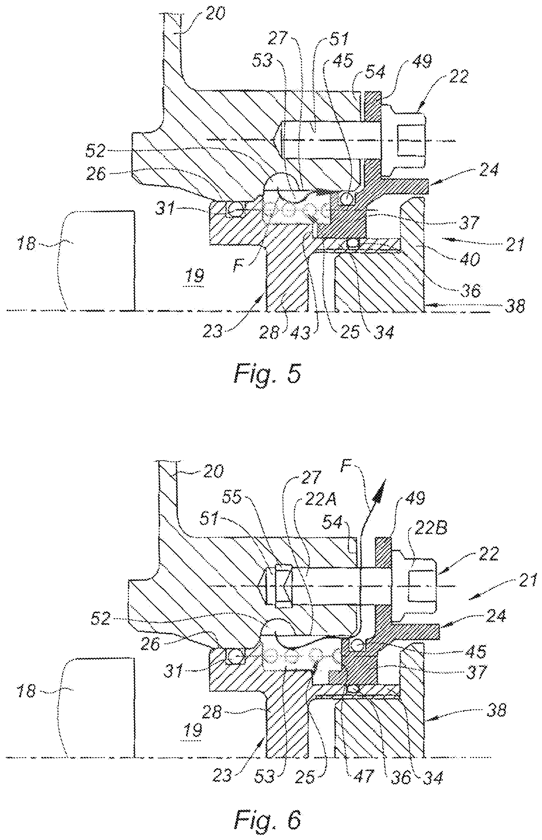

Dans la représentation de la figure 5, le montage des vis 22 dans les trous taraudés 51 est effectif, mais le blocage ou le vissage complet de celles-ci n'est pas réalisé. Un espace minime apparaît entre le collet 49 de la pièce mobile 24 et la face transversale 54 de la paroi 20 du boîtier.

Le déplacement axial de la seconde pièce 24 par les têtes 22B des vis a entraîné la compression du ressort 25 avec rapprochement de la paroi 37 de la pièce 24 vers l'épaulement 43 de la pièce fixe 23, et a permis la mise en place du joint d'étanchéité 45 dans le second alésage 27, de sorte à assurer l'étanchéité vis-à-vis de l'extérieur. L'huile, flèche F, sortant du canal 52 ne peut fuir vers l'extérieur de l'ouverture par le dispositif 21 par la présence des joints 36 et 45.

Pour éviter un tel remontage incomplet des vis, il convient d'utiliser des freins de vis 55 introduits dans le fond des trous taraudés 51 des vis, de sorte que, une fois les vis serrées à la main, c'est-à-dire avant l'engagement des tiges filetées 22A avec les freins 55, le joint d'étanchéité 45 de la seconde pièce mobile 24 du dispositif soit encore à distance de l'entrée du second alésage 27. Ces freins de vis ont pour but d'empêcher le rapprochement de la seconde pièce et donc l'étanchéité du joint associé avec l'ouverture, autrement que par l'utilisation d'un outillage de vissage spécifique garantissant alors le serrage des vis dans les freins et le montage correct du dispositif de bouchage avec étanchéité.

Ainsi, il est possible de déterminer ou calculer la position axiale des freins de vis par rapport à la longueur des vis serrées manuellement pour que celles-ci n'assurent seulement le serrage correct avec étanchéité du dispositif qu'après avoir été vissées par un outil spécifique. Le rapprochement de la seconde pièce 24 (collet 49) de la paroi 20 (face transversale 54) ne peut donc se faire autrement qu'avec l'utilisation de l'outillage spécifique, ce qui apporte une garantie de serrage des vis.

Comme le montre la figure 6, les freins de vis 55 sont des bagues logées dans le fond des trous taraudés et réalisées en une matière appropriée pour l'engagement des tiges filetées des vis par un outil de vissage.

Sur cette figure, les vis 22 ont été montées à la main dans les trous taraudés 51 de la paroi jusqu'au niveau des bagues 55 (en venant en butée contre celles-ci), où seule l'utilisation d'un outil permet de poursuivre le serrage des vis au couple souhaité avec une mise en place du joint d'étanchéité 45. Si l'opérateur oublie de serrer les vis à l'aide de l'outil et laisse le dispositif de bouchage 1 dans la position illustrée, le joint d'étanchéité 45 de la pièce mobile 24 est encore axialement distant de l'entrée de l'alésage 27, avec la pièce soumise à l'action du ressort 25 tendant à l'éloigner vers l'extérieur, en l'occurrence contre les têtes 22B des vis.

Ainsi, si le moteur est mis en marche, une fuite d'huile significative issu du canal 52 et traversant la chambre 53 (et donc l'ouverture) se produit immédiatement vers l'extérieur du boîtier selon la flèche F de la figure 6. Cette fuite engendre simultanément une chute de pression dans le boîtier, laquelle est détectée par l'alarme basse pression. L'oubli du serrage incorrect des vis est là aussi immanquablement détecté par la fuite créée par le dispositif de bouchage de l'invention. Seul le serrage final des vis avec un outil approprié dans les bagues assurera l'étanchéité correct du dispositif dans l'ouverture, comme le montre la figure 3.

A la différence des dispositifs usuels monoblocs, statiques, le dispositif selon l'invention présente deux pièces dont l'une est rendue mobile avec effet piston (par le ressort assisté de la pression d'huile), lorsque l'opérateur oublie le remontage des vis ou effectue incomplètement celui-ci. en créant une fuite importante rapidement détectable.

## Revendications

1. Assemblage comprenant :
- une paroi d'une enceinte dans laquelle est ménagée une ouverture (19) permettant l'accès à un arbre rotatif,
- un dispositif de bouchage (21) de ladite ouverture (19), ledit dispositif (21) étant apte à s'engager avec étanchéité dans ladite ouverture (19) et à être fixé contre la paroi par des éléments de fixation (22),
**caractérisé par le fait que** le dispositif de bouchage (21) comprend deux pièces cylindriques (23, 24) assemblées de façon coulissante l'une par rapport à l'autre et coaxialement à l'ouverture (19), une première pièce (23) apte à se loger de façon statique dans l'ouverture et une seconde pièce (24) apte à être fixée à la paroi par les éléments de fixation (22) et soumis à l'action d'un moyen élastique (25) prévu entre les première et seconde pièces (23, 24) assemblées et tendant à éloigner axialement la seconde pièce de la paroi.

2. Assemblage selon la revendication 1, dans lequel le moyen élastique (25) est un ressort de compression prenant appui sur des faces transversales correspondantes de la première pièce (23) fixe et de la seconde pièce (24) déplaçable.

3. Assemblage selon la revendication 1 ou 2, dans lequel la première pièce (23) est montée en butée axiale dans l'ouverture.

4. Assemblage selon la revendication 3, dans lequel la première pièce (23) présente un épaulement externe (32) apte à s'appliquer contre un épaulement interne (33) formant butée axiale de ladite ouverture.

5. Assemblage selon l'une des revendications 1 à 4, dans lequel les première et seconde pièces (23, 24) portent autour d'elles des joints d'étanchéité (31, 45) aptes à coopérer avec l'ouverture (19), ledit moyen élastique (25) étant prévu entre les joints d'étanchéité desdites pièces.

6. Assemblage selon l'une des revendications 1 à 5, dans lequel la seconde pièce déplaçable (24) est montée avec étanchéité en partie entre la première pièce fixe et la surface interne de l'ouverture (19) et se termine par un collet radial ou embase formant couvercle apte à être rapporté contre la paroi de l'enceinte par les éléments de fixation.

7. Assemblage selon l'une des revendications 1 à 6, dans lequel la seconde pièce (24) est déplaçable axialement entre un épaulement externe (43) de la première pièce et une pièce de butée (38) solidaire de la première pièce.

8. Assemblage selon la revendication 7, dans lequel la pièce de butée (38) est visée dans un passage taraudé (39) de la première pièce et présente un rebord transversal (40) formant butée axiale pour la seconde pièce (24) déplaçable.

9. Boîtier à engrenages formant une enceinte support des machines accessoires d'un turbomoteur **caractérisé en ce qu'**il comporte un assemblage selon l'une quelconque des revendications précédentes, la paroi étant une paroi extérieure (20) du boîtier dans laquelle est ménagée l'ouverture d'accès (19) à un arbre d'entraînement manuel (18) d'un rotor du turbomoteur ou d'une machine accessoire, et le dispositif de bouchage (21) de ladite ouverture d'accès étant engagé avec étanchéité dans ladite ouverture (19) et étant fixé contre la paroi par les éléments de fixation.

10. Boîtier selon la revendication 9, dans lequel des trous taraudés (51) pour recevoir les éléments de fixation (22) sont prévus dans la paroi extérieure, autour de l'ouverture (19), et contiennent des freins de vis (55) contre lesquels s'appliquent les vis, avant leur serrage par un outillage spécifique, en laissant à distance le joint d'étanchéité (45) lié à la seconde pièce, de l'ouverture (19) de la paroi.

## Patentansprüche

1. Baugruppe, umfassend:
- eine Wand einer Kammer, in der eine Öffnung (19) ausgebildet ist, die den Zugang zu einer drehbaren Welle ermöglicht,
- eine Verschlussvorrichtung (21) der Öffnung (19), wobei die Vorrichtung (21) geeignet ist, abdichtend in die Öffnung (19) einzugreifen und durch Befestigungselemente (22) an der Wand befestigt zu werden,
**dadurch gekennzeichnet, dass** die Verschlussvorrichtung (21) zwei zylindrische Stücke (23, 24) umfasst, relativ zueinander auf gleitbare Weise und koaxial zu der Öffnung (19) montiert, wobei ein erstes Stück (23) geeignet ist, auf statische Weise in der Öffnung aufgenommen zu werden, und ein zweites Stück (24) geeignet ist, durch Befestigungselemente (22) an der Wand befestigt zu werden und der Wirkung eines elastischen Mittels (25) unterstellt zu werden, das zwischen dem ersten und zweiten montierten Stück (23, 24) vorgesehen ist, dazu tendiert, das zweite Stück axial von der Wand zu distanzieren.

2. Baugruppe nach Anspruch 1, wobei das elastische Mittel (25) eine Kompressionsfeder ist, die an querverlaufenden Flächen anliegt, die dem festen ersten Stück (23) und dem verschiebbaren zweiten Stück (24) entsprechen.

3. Baugruppe nach Anspruch 1 oder 2, wobei das erste Stück (23) auf axialem Anschlag in der Öffnung angebracht ist.

4. Baugruppe nach Anspruch 3, wobei das erste Stück (23) einen externen Ansatz (32) aufweist, geeignet, um an einem internen Ansatz (33), der den axialen Anschlag der Öffnung bildet, anzuliegen.

5. Baugruppe nach einem der Ansprüche 1 bis 4, wobei das erste und zweite Stück (23, 24) um sich herum Dichtungen (31, 45) tragen, geeignet, um mit der Öffnung (19) zusammenzuwirken, wobei das elastische Mittel (25) zwischen den Dichtungen der Stücke vorgesehen ist.

6. Baugruppe nach einem der Ansprüche 1 bis 5, wobei das verschiebbare zweite Stück (24) teilweise zwischen dem festen ersten Stück und der internen Oberfläche der Öffnung (19) mit Abdichtung angebracht ist und mit einem radialen Kragen oder einer Abdeckung bildenden Grundplatte endet, geeignet, um durch die Befestigungselemente an der Wand der Kammer beigebracht zu werden.

7. Baugruppe nach einem der Ansprüche 1 bis 6, wobei das zweite Stück (24) zwischen einem externen Ansatz (43) des ersten Stücks und einem mit dem ersten Stück fest verbundenen Anschlagstück (38) axial verschiebbar ist.

8. Baugruppe nach Anspruch 7, wobei das Anschlagstück (38) in einem Innengewindedurchgang (39) des ersten Stücks angelegt ist und einen querverlaufenden Rand (40) aufweist, der einen axialen Anschlag für das verschiebbare zweite Stück (24) bildet.

9. Gehäuse mit Getrieben, das eine Trägerkammer von Hilfsmaschinen eines Turbomotors bildet, **dadurch gekennzeichnet, dass** es eine Baugruppe nach einem der vorstehenden Ansprüche beinhaltet, wobei die Wand eine Außenwand (20) des Gehäuses ist, in der die Zugangsöffnung (19) für eine manuelle Antriebswelle (18) eines Rotors des Turbomotors oder einer Hilfsmaschine ausgebildet ist, und die Verschlussvorrichtung (21) der Zugangsöffnung mit Abdichtung mit der Öffnung (19) in Eingriff steht und durch Befestigungselemente an der Wand befestigt ist.

10. Gehäuse nach Anspruch 9, wobei Innengewindelöcher (51) zum Aufnehmen der Befestigungselemente (22) in der Außenwand um die Öffnung (19) herum vorgesehen sind und Schraubensicherungen (55) enthalten, an denen die Schrauben vor deren Festziehen durch ein Spezialwerkzeug anliegen, wobei die mit dem zweiten Stück verbundene Dichtung (45) von der Öffnung (19) der Wand auf Abstand gehalten wird.

## Claims

1. An assembly comprising:
- a wall of an enclosure in which is provided an opening (19) for access by a rotary shaft,
- a sealing device (21) for said opening (19), said device (21) being adapted to engage sealingly in said opening (19) and to be fixed against the wall by fixing elements (22),
**characterised in that** the sealing device (21) comprises two cylindrical parts (23, 24) assembled in a sliding manner with respect to each other and coaxially to the opening (19), a first part (23) adapted to be statically housed in the opening and a second part (24) adapted to be fixed to the wall by the fixing elements (22) and subjected to the action of a resilient means (25) provided between the assembled first and second parts (23, 24) and tending to move the second part axially away from the wall.

2. The assembly according to claim 1, wherein the resilient means (25) is a compression spring bearing on corresponding transverse faces of the fixed first part (23) and the displaceable second part (24).

3. The assembly according to claim 1 or 2, wherein the first part (23) is mounted in axial abutment in the opening.

4. The assembly according to claim 3, wherein the first part (23) has an external shoulder (32) adapted to engage an inner shoulder (33) forming an axial abutment of said opening.

5. The assembly according to any one of claims 1 to 4, wherein the first and second parts (23, 24) carry around them seal joints (31, 45) adapted to cooperate with the opening (19), said resilient means (25) being provided between the seal joints of said parts.

6. The assembly according to any one of claims 1 to 5, wherein the second displaceable part (24) is sealingly mounted partly between the first fixed part and the inner surface of the opening (19) and terminates in a radial collar or base forming a cover adapted to be fitted against the wall of the enclosure by the fixing elements.

7. The assembly according to any one of claims 1 to 6, wherein the second part (24) is axially displaceable between an external shoulder (43) of the first part and an abutment part (38) secured to the first part.

8. The assembly according to claim 7, wherein the abutment part (38) is targeted in a threaded passage (39) of the first part and has a transverse flange (40) forming an axial abutment for the displaceable second part (24).

9. A gearbox forming a support enclosure for the accessory machines of a turboshaft engine, **characterised in that** it comprises an assembly according to any one of the preceding claims, the wall being an outer wall (20) of the gearbox in which is provided the access opening (19) to a manual drive shaft (18) of a rotor of the turboshaft engine or of an accessory machine, and the sealing device (21) for said access opening being sealingly engaged in said opening (19) and being fixed against the wall by the fixing elements.

10. The gearbox according to claim 9, wherein threaded holes (51) for receiving the fixing elements (22) are provided in the outer wall, around the opening (19), and contain screw locking (55) against which the screws are applied, prior to tightening by a specific tool, leaving the seal joints (45) connected to the second part at a distance from the opening (19) of the wall.
